# EUROPEAN PATENT SPECIFICATION

(11) **EP 1 331 597 B1**
(45) Date of publication and mention of the grant of the patent: **19.04.2006**
(21) Application number: 02253421.8
(22) Date of filing: 16.05.2002
(51) Int. Cl.: G06K 7/08, G06K 17/00, G06K 1/12, B41J 13/12

(54) **Magnetic stripe processing apparatus and printer**
Magnetstreifen-Behandlungsapparat und Drucker
Appareil de traitement de piste magnétique et imprimante

(30) Priority: 29.01.2002 JP 2002020141
(43) Date of publication of application: 30.07.2003
(73) Proprietor: FUJITSU LIMITED, Kawasaki-shi, Kanagawa 211-8588 (JP)
(72) Inventor: Morimoto, Yasuhiro, Inagi-shi, Tokyo 206-8555 (JP)
(74) Representative: Stebbing, Timothy Charles

(56) References cited:
- US-A- 4 944 616
- US-A- 5 949 058

## Description

The present invention relates generally to the processing of a medium such as a bankbook having a predetermined area on its surface in which data is stored. More specifically, the invention relates to a magnetic stripe processing apparatus and printer that executes data read/write processing on a magnetic stripe attached to a medium, and in particular to a magnetic stripe processing apparatus and printer that carries the medium placed at a given position in an insertion slot having a greater width than that of the medium, and that executes data reading and/or writing on a magnetic stripe positioned at right angles to a direction in which the medium is carried, using a magnetic head movable along the magnetic stripe.

Financial institutions use printers that print on a medium such as a bankbook to which a magnetic stripe is attached. Usually, such printers are equipped with a magnetic stripe read/write function that writes data on a magnetic stripe attached to a medium and reads data written on the magnetic stripe, configuring a magnetic stripe processing apparatus. This specification describes a magnetic stripe processing apparatus hereunder in the present invention, by taking a printer as an example.

An "automatic adjustment" printer can cope with media of various types and forms, enabling an operator to set media at a desired position in the medium-insertion slot of the printer. The width of the medium-insertion slot of the automatic adjustment printer is the same as the widest medium among those to be handled by the printer. For media narrower than the insertion slot, it is not necessary for the operator to set the edge of such a medium at either edge of the insertion slot, because he/she can set it at a desired position in the slot.

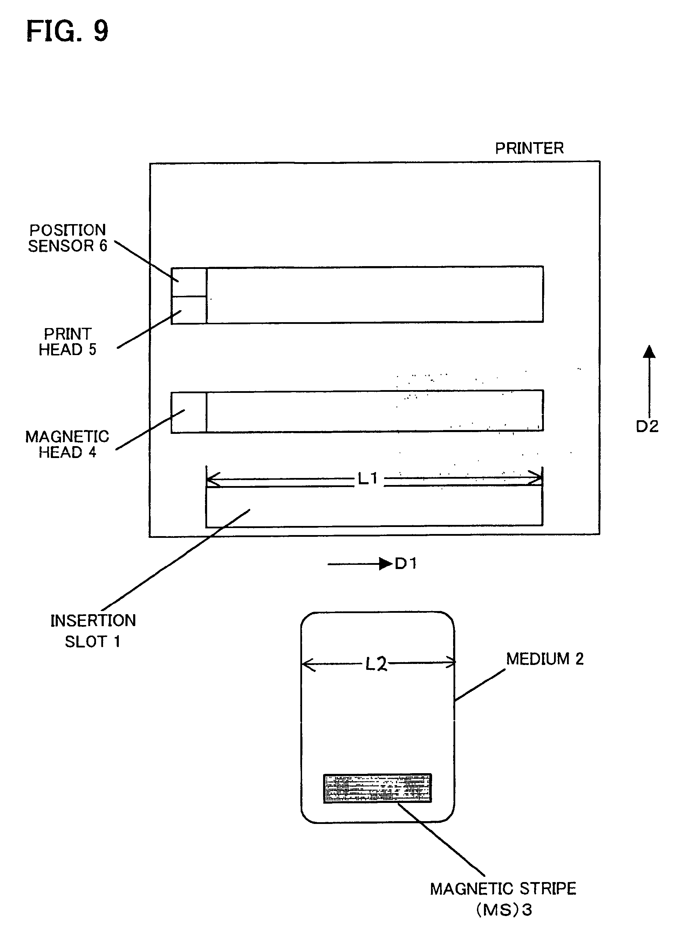

FIG. 9 is a schematic view that shows the relationship between the medium carrying direction, the position of a magnetic stripe attached to the medium and the magnetic head's moving direction. As shown in FIG. 9, the width L1 of the insertion slot 1 extending in the first direction D1 is greater than the width L2 of the medium 2. The medium set in the insertion slot 1 is carried in the second direction D2 crossing at right angles to the first direction, and then, inserted inside the printer. In this case, the medium 2 is set and carried with its magnetic stripe aligned with the first direction D1.

The magnetic head 4 installed inside the printer can be moved along the first direction D1, and its traveling range corresponds to the width L1 of the insertion slot 1. The magnetic head executes the writing or reading of data on the inserted magnetic stripe 3 while moving along the first direction D1.

The printer is also equipped with a print head 5 movable along the first direction D1 that prints on inserted media. The print head 5 has a position sensor 6 composed of a reflective-type light sensor, etc., and therefore, it can detect the edge of a medium by moving the position sensor 6 in the first direction D1.

The magnetic head 4 and the print head 5 regard the position of either edge (left edge position in FIG. 9) within the moving range as the reference position (home position). After detecting the position of the left edge of a medium and moving to the position of the left edge of the medium from the home position, they start data read/write processing.

In the past, however, as the position sensor 6 has detected only the position of the left edge of an inserted medium, the following problems occur, i.e. the position sensor does not detect the position of the right edge of the medium, leaving the position unclear. When the magnetic head starts the read/write processing while moving from the position of the left edge of the medium in the first direction D1, it goes beyond the position of the right edge of the medium and moves to the right-hand limit of its moving range (right edge in the moving range). Therefore, the magnetic head moves further even after reaching the right edge position of the medium, resulting in a wasted movement of the magnetic head.

A host apparatus is not informed of information on the completion of a given command until the magnetic head moves back and returns to the home position after reaching the position of the right edge in the moving range, delaying the next command output from the host apparatus.

In addition, when an error occurs during read/ write processing, the magnetic head repeats the same procedure again after returning to the home position, resulting in a longer processing time.

US-A-5949058 describes a magnetic card set to an exclusive cardholder and inserted into a passbook printer. The passbook printer can read a magnetic stripe of a passbook and print the passbook or a document. The cardholder is fed by a feed roller or the like. Control device can detect the length of the cardholder by an insertion slot sensor. The control device adjusts the position of a magnetic stripe to the position of a magnetic head by the feed roller and the magnetic stripe is read by the magnetic head. The control device decides whether the read data is the data in the magnetic card or the data in the passbook in accordance with the format of the read data.

US-A-4944616 describes a magnetic read/write head supported on the carriage that carries the platen of a passbook printer. The passbook is moved to the printing station and a sensor is provided for detecting the presence of the passbook. A height adjusting member operates to move the read/write head into position for writing data into and for reading data from a magnetic stripe on the passbook.

It is therefore desirable to provide a magnetic stripe processing apparatus that reduces the read/ write processing time for magnetic stripes and a printer having the processing apparatus.

The present invention is defined in the attached independent claim to which reference should now be made. Further, preferred features may be found in the sub-claims appended thereto.

According to one aspect of the present invention, there is provided a medium processing apparatus comprising: an insertion slot having a width in a first direction greater than that of a medium; a conveyance unit for conveying the medium disposed at a desired position with respect to the insertion slot along a second direction orthogonal to the first direction; a sensor capable of moving through at least the distance corresponding to the width of the insertion slot along the first direction, the sensor detecting data in a sensing area on the medium, said sensing area extending in the first direction from a first end to a second end thereof; a driving unit for driving the sensor; and a detection unit for detecting a first edge position and a second edge position in the first direction corresponding to both edges of the width of the medium, wherein the driving unit moves the sensor from a predetermined reference position to a sensing start position near one end of the sensing area based on the first edge position, the driving unit then moving the sensor to a sensing end position near the other end of the sensing area while the sensor detects data in the sensing area, the driving unit returning the sensor from the sensing end position toward the reference position after arrival of the sensor at the sensing end position.

Here, the sensing end position is conveniently set as the second edge position, so as to deal with sensing areas of uncertain length.

Preferably, the sensor is a magnetic head, the sensing area is a magnetic stripe, and the apparatus is a magnetic stripe processing apparatus.

In this way, the moving distance of the magnetic head is shortened, the wasted movement of the magnetic head is reduced, and thus, the processing time is shortened by detecting the positions of both sides of a medium drawn into the magnetic stripe processing apparatus and by preventing the magnetic head, which executes the read and/or write processing of data on a magnetic stripe attached to a medium, from moving all the distance from one extreme to the other extreme of its moving range so that the moving distance of the magnetic head is limited according to the position of the medium.

Preferably, the magnetic stripe processing apparatus further comprises:
a control unit for receiving a command from a host apparatus, to control the driving unit based on the command, wherein
the driving unit informs the control unit of end information before returning the magnetic head to the reference position from the second edge position after the magnetic head reaches the second edge position.

According to this characteristic, before the magnetic head returns to the home position, end information (signifying the end of reading or writing) is output and the host apparatus connected to the magnetic stripe processing apparatus is informed of the end information. Therefore, the host apparatus can send the next command even before the magnetic head returns to the home position, contributing to the shortening of the time required for processing the entire magnetic stripe.

Reference is made, by way of example only, to the accompanying drawings, in which:
FIG. 1 is a schematic external view of a printer that makes up a magnetic stripe processing apparatus in accordance with an embodiment of the present invention;
FIG. 2 is a control block diagram of the printer in accordance with the embodiment of the present invention;
FIG. 3 is a flowchart showing a first magnetic stripe processing of the printer in accordance with the embodiment of the present invention;
FIG. 4 is a flowchart showing a second magnetic stripe processing of the printer in accordance with the embodiment of the present invention;
FIG. 5 is a flowchart showing a third magnetic stripe processing of the printer in accordance with the embodiment of the present invention;
FIG. 6 is a flowchart showing the third magnetic stripe processing of the printer in accordance with the embodiment of the present invention;
FIGs. 7A, 7B and 7C are diagrams that describe the movement of the magnetic head corresponding to the magnetic stripe processing in the embodiment of the present invention;
FIGs. 8A and 8B are diagrams that explain an example of a standard of the magnetic stripe attached to a medium; and
FIG. 9 is a schematic view that shows the relationship between the direction in which a medium set in the printer is carried, the position of a magnetic stripe attached to the medium and the magnetic head's moving direction.

An embodiment of the present invention will now be described, using a magnetic stripe processing apparatus as an example. It is to be noted however that the technical scope of the invention is not limited to this embodiment.

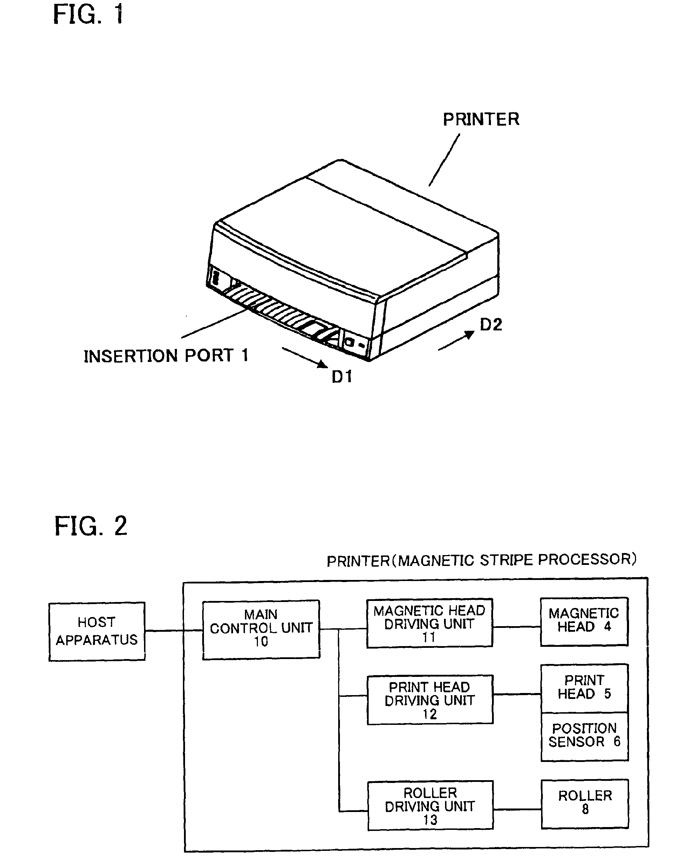

FIG. 1 is a schematic external view of a printer equipped with a magnetic stripe processing apparatus in the embodiment of the present invention. The printer has a magnetic head and a print head inside (not shown). It executes the read/write processing of data on a magnetic stripe attached to a medium inserted in it from the insertion slot 1 and prints an entry in a bankbook, etc., according to the host apparatus connected to the printer (not shown). The relationship in position between the magnetic head, the print head and the magnetic stripe and their moving directions are the same as those in FIG. 9. The relationship and the moving directions are explained again hereunder by referring to FIG. 9. The width L1 of the insertion slot 1 extending along the first direction D1 is wider than the width L2 of the medium 2. The medium set in the insertion slot 1 is carried in the second direction D2 crossing at right angles to the first direction, and thus, inserted in the printer. In this case, the medium 2 is conveyed with the magnetic stripe attached to the medium positioned along the first direction D1.

The magnetic head 4 installed inside the printer is movable along the first direction D1, and its moving range corresponds to the width L1 of the insertion slot 1. The magnetic head 4 executes writing/reading of data on the inserted magnetic stripe 3 while moving in the first direction D1.

The print head 5, as it moves in the first direction D1, prints on the inserted medium. The magnetic head 4 and the print head 5 regard the position of either edge (left edge position in FIG. 9) within the moving range as the reference position (home position) from where they start moving. The edge of the medium can be detected by moving the position sensor 6 installed in the print head 5 along the first direction D1. As described in the following section, the position sensor detects both the edges (sides) of the medium in this embodiment of the present invention.

FIG. 2 is a printer control block diagram in the embodiment of the present invention. The printer is composed of a magnetic head 4 that executes the reading and/or writing of data on a magnetic stripe attached to a medium; a print head 5 for printing; a position sensor 6 installed in the print head 5; a roller 8 to carry the medium; magnetic head driving unit 11 to drive them; a print head driving unit 12; a roller driving unit 13; and the main control unit 10 that controls each driving unit according to the command from a host apparatus.

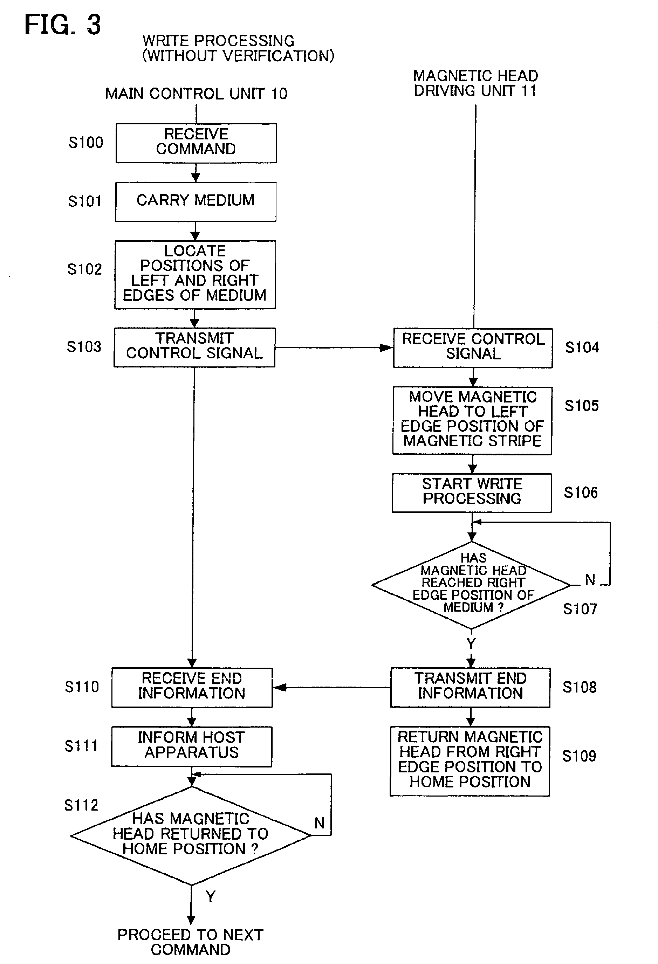

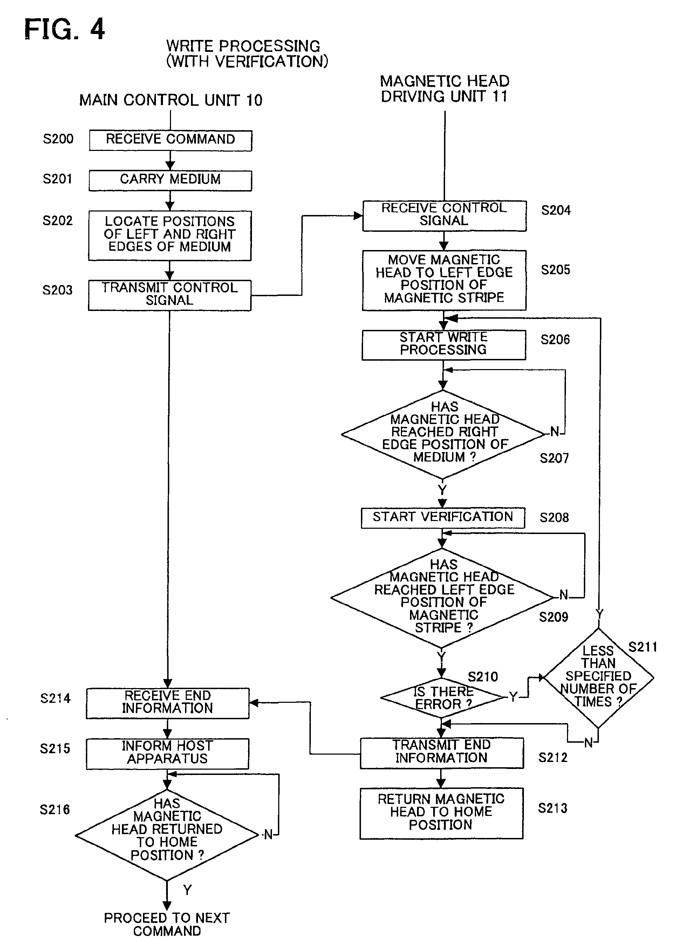

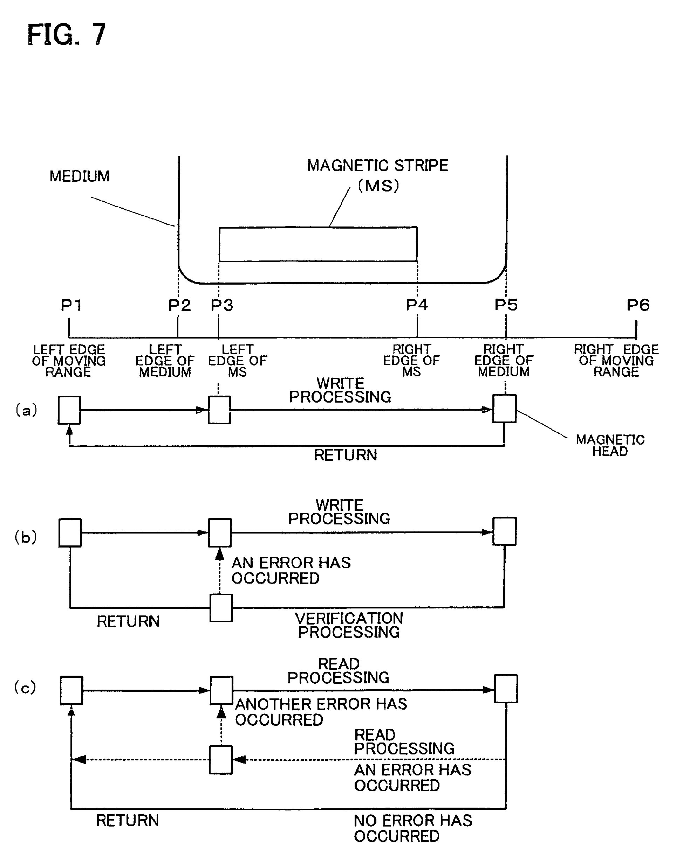

FIG. 3 is a flowchart showing how the printer performs first magnetic stripe processing in this embodiment. The first magnetic stripe processing is the write processing of data on the magnetic stripe (without verification). FIG. 7 A is a drawing that describes the magnetic head's movement corresponding to the first magnetic stripe processing. The movement is explained by following FIG. 4 and referring to FIG. 7A. In the case of write processing without verification, the verification process can be performed by read processing executed separately.

In FIG. 3, when the main control unit 10 of the printer 100 receives a write command from the host apparatus (computer) 200 connected to the printer 100 (S100), the roller driving unit 13 drives the roller 8 to draw the medium set at the insertion slot 1 to the designated position inside the printer under the control of the main control unit 10 of the printer (S101). More specifically, the roller 8 carries the medium 2 set in the insertion slot 1 in such a manner that the magnetic stripe 3 of the medium 2 is placed within the moving range of the magnetic head 4. In this case, the magnetic head 4 is positioned at the initial position (home position), that is, the left edge position (position P1 in FIG. 7A) of the moving range.

Under the control of the main control unit 10, the print head driving unit 12 makes the print head 5 scan in the first direction D1 so that the position sensor 6 installed in the print head 5 can detect the positions of both left and right edges of the medium 2 (S102). The print head 5 or the position sensor 6 moves from the left edge position towards the right edge position of its moving range, and detects the positions of both left and right edges of the medium 2 during the movement.

The main control unit 10 transmits a control signal to the magnetic head driving unit 11 (S103). Upon reception of the control signal (S104), the magnetic head driving unit 11 drives the magnetic head as follows according to the received signal.

The magnetic head driving unit 11 first moves the magnetic head 4 at the home position P1 to the left edge position P3 (see FIG. 7A) at or near the start of the magnetic stripe (MS) (S105) . As described below, the position to attach a magnetic stripe to a medium is standardized, and therefore, the distance from the left edge position and from the bottom of the medium to the attaching position is already known information. Therefore, the left edge position P3 of the magnetic stripe can be calculated from the left edge position P2 of the medium detected at the above step S102 and the already known distance from the left edge position of the medium.

The magnetic head driving unit 11 moves the magnetic head 4 from the left edge position P3 of the magnetic stripe along the first direction D1 to start the write processing (S106). When the magnetic head 4 reaches the right edge position P5 of the medium (S107), the magnetic head driving unit 11 transmits end information to the main control unit 10 (S108), and then, returns the magnetic head 4 to the home position P1 by moving it from the right edge position P5 of the medium in the opposite direction (S109). Although the right edge position P4 cannot be detected as the length of the magnetic stripe differs depending on the type of medium, the maximum length of any magnetic stripe falls within the right edge position of the medium. Therefore, the write processing on the entire magnetic stripe can be ensured by moving the magnetic head 4 to the right edge position P5 of the medium. Likewise, in the embodiment of the present invention, after the right edge position P5 of the medium is detected, the magnetic head 4 is moved not to the right edge position P6 of the moving range but to a position at or near the right edge position of the medium P5, which is reached before P6. By the above method, the moving distance of the magnetic head 4 is shortened, that is, the wasted movement of the magnetic head 4 is reduced, and thus, the processing time is shortened.

Before returning the magnetic head 4 to the home position P1, the magnetic head driving unit 11 transmits end information to the main control unit 10, and then, the main control unit 10 informs the host apparatus of the received information. Therefore, the host apparatus can send the next command to the main control unit 10 even before the magnetic head 4 returns to the home position P1, contributing to the shortening of the time required for processing the entire magnetic stripe.

In the past, the magnetic head driving unit 11 has transmitted end information after returning the magnetic head 4 to the home position P1, slowing down the timing for informing a host apparatus of the end information and delaying the transmission of the next command from the host apparatus. On the other hand, as shown in the above embodiment, the magnetic head driving unit 11 transmits end information before returning the magnetic head 4 to the home position P1, quickening the timing for sending the next command from the host apparatus.

Referring again to FIG. 3, when receiving end information (S110), the main control unit 10 informs the host apparatus of the end information (S111), checks that the magnetic head 4 has returned to the home position (S112), and proceeds to the next command processing. As described above, in the past, a host apparatus has been informed of end information and the next command from the host apparatus has been received at this step. On the other hand, in this embodiment, the next command from the host apparatus can be received before checking that the magnetic head 4 has returned to the home position. Therefore, the next command can be processed immediately after checking that the magnetic head has returned to the home position.

FIG. 4 is a flowchart showing second magnetic stripe processing of the printer in the embodiment of the present invention. The second magnetic stripe processing is the write processing of data on the magnetic stripe (with verification). FIG. 7B is a drawing that describes the magnetic head's movement corresponding to the second magnetic stripe processing. The movement is explained by following FIG. 4 and referring to FIG. 7B.

In FIG. 4, when the main control unit 10 of the printer 100 receives a command to write on the magnetic stripe from the host apparatus (computer) 200 connected to the printer 100 (S200), the roller driving unit 13 drives the roller 8 to draw the medium set in the insertion slot 1 to the designated position inside the printer, under the control of the main control unit 10 of the printer (S201) as in FIG. 3.

Under the control of the main control unit 10, the print head driving unit 12 makes the print head 5 scan in the first direction D1 so that the position sensor 6 installed in the print head 5 can detect the positions of both left and right edges of the medium 2 (S202). The main control unit 10 transmits a control signal to the magnetic head driving unit 11 (S203). Upon reception of the control signal (S204), the magnetic head driving unit 11 drives the magnetic head as follows according to the received signal.

As in the first magnetic stripe processing described above, the magnetic head driving unit 11 moves the magnetic head 4 at the home position P1 to the left edge position P3 (see FIG. 7B) of the magnetic stripe (S205) .

The magnetic head driving unit 11 moves the magnetic head 4 from the left edge position P3 of the magnetic stripe along the first direction D1 to start the write processing (S206). When the magnetic head 4 reaches the right edge position P5 of the medium (S207), the magnetic head driving unit 11 moves it from the right edge position P5 in the opposite direction to start the verification processing (S208) . Although the distance to the right edge position P4 of the magnetic stripe (MS) is not detected, the magnetic head 4 starts receiving a magnetic stripe data signal at the right edge position P4 when moving from the right edge position of the medium to the right edge position of the magnetic stripe. Therefore, the beginning of the data can be identified and the data from the magnetic stripe can be read even if the magnetic head 4 is moved in the opposite direction.

When the magnetic head 4 reaches the left edge position P3 of the magnetic stripe (S209), the magnetic head driving unit 11 verifies the read data and checks if an error has occurred (S210). If there is no error, the magnetic head driving unit transmits end information to the main control unit 10 (S212), and then, moves the magnetic head 4 to return it to the home position P1 (S213).

If there is an error, the magnetic head driving unit returns to Step S206 and repeat the write processing as long as the number of retries is less than the specified number of times.

As in the first magnetic stripe processing described above, when receiving end information (S214), the main control unit 10 informs the host apparatus of the end information (S215), checks that the magnetic head 4 has returned to the home position (S216), and proceeds to the next command processing.

Therefore, in the second magnetic stripe processing, the magnetic head 4 is moved not to the right edge position P6 of the moving range but to the right edge position of the medium P5, which is detected before P6. By the above method, the moving distance of the magnetic head 4 is shortened, the wasted movement of the magnetic head 4 is reduced, and thus, the processing time is shortened.

In the verification processing, the magnetic head also moves in the opposite direction from the right edge position P5 of the medium, thus shortening the moving time and processing time as well, compared with moving from the right edge position P6 of the moving range.

As in the first magnetic stripe processing, before returning the magnetic head 4 to the home position P1, the magnetic head driving unit 11 transmits end information to the main control unit 10, and then, the main control unit 10 informs the host apparatus of the received information. Therefore, the host apparatus can send the next command to the main control unit 10 even before the magnetic head 4 returns to the home position P1, contributing to the shortening of the time required for processing magnetic stripes.

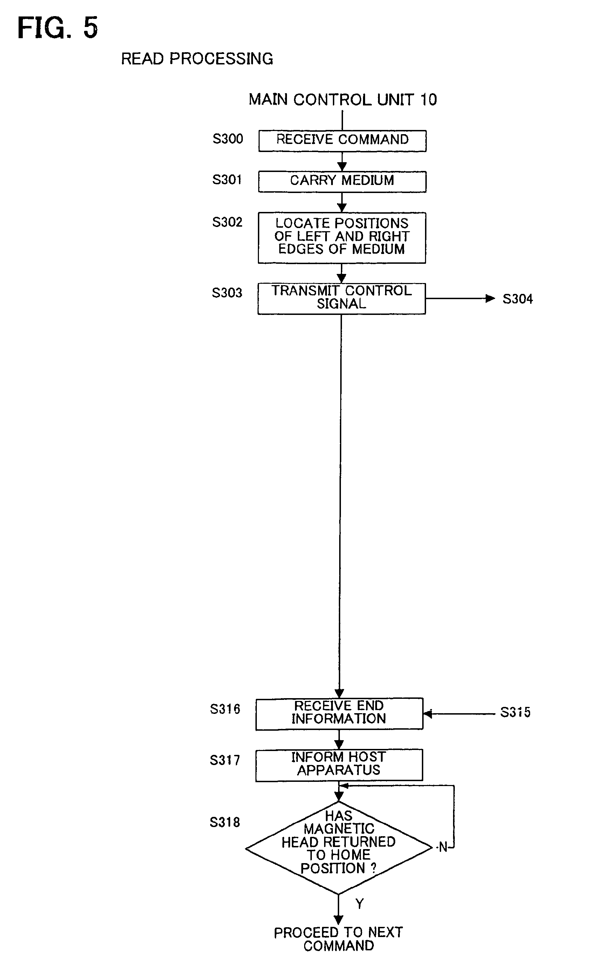

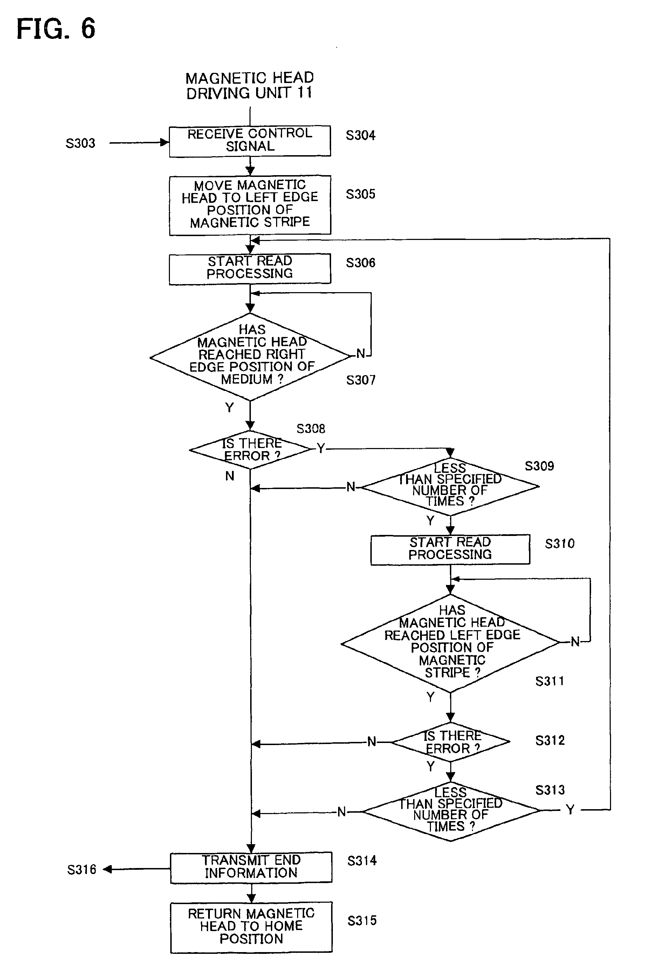

Figures 5 and 6 are flowcharts showing a third magnetic strip processing of the printer in the embodiment of the present invention. The third magnetic stripe processing is the read processing of data on the magnetic stripe. FIG. 7C is a drawing that describes the magnetic head's movement corresponding to the third magnetic stripe processing. The movement is explained by following Figures 5 and 6 and referring to FIG. 7C.

In FIG. 5, when the main control unit 10 of the printer 100 receives a command to write on the magnetic stripe from the host apparatus (computer) 200 connected to the printer 100 (S300), the roller driving unit 13 drives the roller 8 to draw the medium set at in insertion slot 1 to the designated position inside the printer under the control of the main control unit 10 of the printer (S301) as in FIG. 3.

Under the control of the main control unit 10, the print head driving unit 12 makes the print head 5 scan in the first direction D1 so that the position sensor 6 installed in the print head 5 can detect the positions of both left and right edges of the medium 2 (S302). The main control unit 10 transmits a control signal to the magnetic head driving unit 11 (S303). In FIG. 6, upon reception of the control signal (S304), the magnetic head driving unit 11 drives the magnetic head as follows according to the received signal.

As in the first magnetic stripe processing described above, the magnetic head driving unit 11 moves the magnetic head 4 at the home position P1 to the left edge position P3 of the magnetic stripe (S305).

The magnetic head driving unit 11 moves the magnetic head 4 from the left edge position P3 of the magnetic stripe along the first direction D1 to start the read processing (S306). When the magnetic head 4 reaches the right edge position P5 of the medium (S307), the magnetic head driving unit 11 checks if there is an error in the read data (S308). If there is an error, the magnetic head driving unit moves the magnetic head from the right edge position P5 along the opposite direction to repeat the read processing (S310) as long as the number of retries is less than the specified number of times (S309).

If the data is read in the opposite direction from the right edge position of the medium, the beginning of the data can be identified when the magnetic head starts receiving a data signal, as in the verification processing in the second magnetic stripe processing described above.

When the magnetic head 4 reaches the left edge position P3 of the magnetic stripe (S311), the magnetic head driving unit 11 checks if there is an error in the read data (S312). If there is an error, the magnetic head driving unit returns to Step S306 and repeats the read processing from the left edge position P3 of the magnetic stripe as long as the number of retries is less than the specified number of times (S313).

If there is no error at Steps S308 and S312, the magnetic head driving unit transmits end information to the main control unit 10 (S314), and then, moves the magnetic head 4 from the right edge position P5 of the medium or from the left edge position P3 of the magnetic stripe along the opposite direction to return it to the home position P1 (S315).

Back in FIG. 5, when receiving end information (S316), the main control unit 10 informs the host apparatus of the end information (S317), checks that the magnetic head 4 has returned to the home position (S318), and proceeds to the next command processing as in the first magnetic stripe processing described above.

Therefore, in the third magnetic stripe processing, the magnetic head 4 is moved not to the right edge position P6 of the moving range but to the right edge position of the medium P5, which is reached before P6, as in the first or second magnetic stripe processing. By the above method, the moving distance of the magnetic head 4 is shortened, the wasted movement of the magnetic head 4 is reduced, and thus, the processing time is shortened.

Even if there is an error in the read processing, the data is read by moving the magnetic head in the opposite direction from the right edge position P5 of the medium so that the retry processing time can be shortened.

In the past, the above processes from Step S305 to Step S309 have been repeated after the magnetic head 4 is returned to the home position P1. It has taken a long time to return the magnetic head 4 to the home position, resulting in delay in the processing time. On the other hand, in the third magnetic stripe processing, the data is read without returning the magnetic head 4 to the home position P1, quickening the processing time.

As in the first magnetic stripe processing, before returning the magnetic head 4 to the home position P1, the magnetic head driving unit 11 transmits end information to the main control unit 10, and then, the main control unit 10 informs the host apparatus of the received information. Therefore, the host apparatus can send the next command to the main control unit 10 even before the magnetic head 4 returns to the home position P1, contributing to the shortening of the time required for processing the entire magnetic stripe.

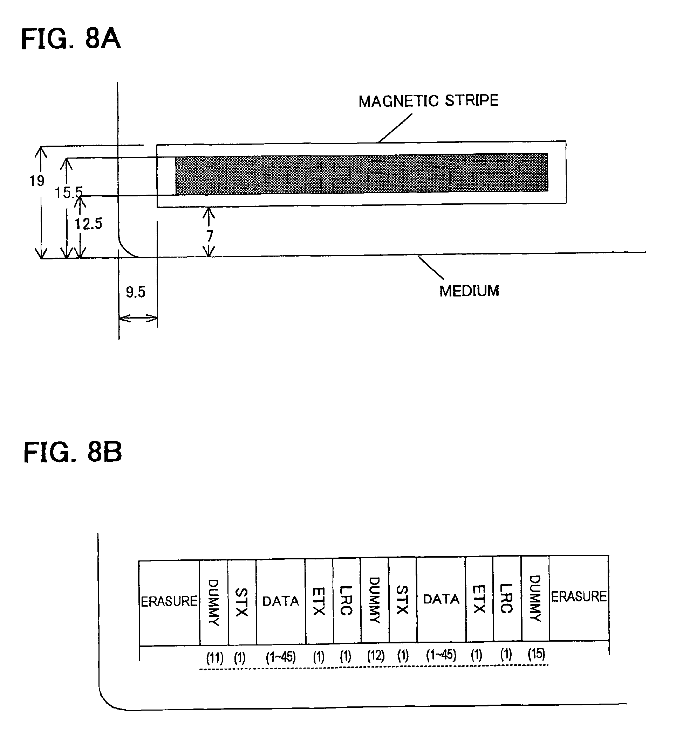

FIGs. 8A and 8B are diagrams that explain an example of a standard of the magnetic stripe attached to a medium. As shown in FIG. 8A, a magnetic stripe is attached along the first direction D1 from the specified distance from the left edge and from the bottom of a medium (for example, a bankbook) as the reference position. The length of the magnetic stripe differs depending on the type of medium.

FIG. 8B shows an example of the data format to be written on a magnetic stripe. An area for erased data, or dummy data is set at both ends of the data format, and the area between the ends is divided into 2 blocks. Each block is composed of start bit (STX), data, end bit (ETX) and parity bit (LRC). A dummy data area is also set between the blocks.

In the embodiment of the present invention, a check or the like can also be used as a medium to which a magnetic stripe is attached, in addition to the bankbook used as an example.

According to the present invention, as set forth hereinabove, the moving distance of the magnetic head is shortened, the wasted movement of the magnetic head is reduced, and thus, the processing time is shortened by detecting the positions of both ends of a medium set in the magnetic stripe processing apparatus and by preventing the magnetic head, which executes the read/write processing of data on a magnetic stripe attached to a medium, from moving all the distance from one edge to the other edge of its moving range so that the moving distance of the magnetic head is limited according to the position of the medium. Furthermore, before the magnetic head returns to the home position, end information is output and the host apparatus connected to the magnetic stripe processing apparatus is informed of the end information. Therefore, the host apparatus can send the next command even before the magnetic head returns to the home position, contributing to the shortening of the time required for processing the entire magnetic stripe.

## Claims

1. A magnetic stripe processing apparatus comprising:
an insertion slot (1) having a width greater than that of a medium (2) in the first direction (D1);
a conveyance unit (13) for conveying the medium disposed at a desired position with respect to the insertion slot along a second direction (D2) orthogonal to the first direction;
a magnetic head (4) capable of moving through at least the distance corresponding to the width of the insertion slot along the first direction, the magnetic head capable of reading or writing data on a magnetic stripe attached to the medium along the first direction; and
a driving unit (11) for driving the magnetic head;
**characterized by**
a detection unit (6) for detecting a first edge position and a second edge position in the first direction corresponding to both edges of the width of the medium, and in that
the driving unit is arranged to move the magnetic head from a predetermined reference position to an edge position of the magnetic stripe at a predetermined distance from the first edge position, the driving unit being arranged to move the magnetic head further from the edge position of the magnetic stripe to the second edge position, while simultaneously executing data read or write processing on the magnetic stripe using the magnetic head, the driving unit being arranged to return the magnetic head from the second edge position toward the reference position after arrival of the magnetic head at the second edge position.

2. The magnetic stripe processing apparatus according to claim 1, further comprising:
a control unit (10) for receiving a command from a host apparatus, to control the driving unit based on the command, wherein
the driving unit is arranged to inform the control unit of end information before returning the magnetic head to the reference position from the second edge position after the magnetic head reaches the second edge position.

3. The magnetic stripe processing apparatus according to claim 1 or 2, wherein
when written data is to be verified in data write processing on a magnetic stripe, the driving unit is arranged to execute verification processing by moving the magnetic head in the opposite direction from the second edge position to the edge position of the magnetic stripe after the magnetic head reaches the second edge position.

4. The magnetic stripe processing apparatus according to claim 1, 2, or 3, wherein
in data read processing on a magnetic stripe, the driving unit is arranged to execute again the read processing by moving the magnetic head in the opposite direction from the second edge position to the edge position of the magnetic stripe when an error is found after the magnetic head reaches the second edge position.

5. The magnetic stripe processing apparatus according to claim 1, 2 or 3, wherein the magnetic stripe processing apparatus is a printer having a print head for printing on the medium.

## Revendications

1. Appareil de traitement de piste magnétique comprenant :
une fente d'insertion (1) ayant une largeur supérieure à celle d'un support (2) dans la première direction (D1) ;
une unité de transport (13) pour transporter le support disposé à une position souhaitée par rapport à la fente d'insertion le long d'une deuxième direction (D2) orthogonale à la première direction ;
une tête magnétique (4) capable de se déplacer au moins sur la distance correspondant à la largeur de la fente d'insertion le long de la première direction, la tête magnétique étant capable de lire ou d'écrire des données sur une piste magnétique fixée sur le support le long de la première direction ; et
une unité d'entraînement (11) pour entraîner la tête magnétique ;
**caractérisé par**
une unité de détection (6) pour détecter une première position de bord et une deuxième position de bord dans la première direction correspondant aux deux bords de la largeur du support, et en ce que
l'unité d'entraînement est agencée pour déplacer la tête magnétique depuis une position de référence prédéterminée jusqu'à une position de bord de la piste magnétique à une distance prédéterminée de la première position de bord, l'unité d'entraînement étant agencée pour déplacer la tête magnétique également de la position de bord de la piste magnétique à la deuxième position de bord, tout en exécutant simultanément un traitement de lecture ou d'écriture de données sur la piste magnétique au moyen de la tête magnétique, l'unité d'entraînement étant agencée pour faire revenir la tête magnétique de la deuxième position de bord vers la position de référence après l'arrivée de la tête magnétique à la deuxième position de bord.

2. Appareil de traitement de piste magnétique selon la revendication 1, comprenant en outre :
une unité de commande (10) pour recevoir une commande d'un appareil hôte, pour commander l'unité d'entraînement d'après la commande, dans lequel
l'unité d'entraînement est agencée pour informer l'unité de commande de l'information de fin avant de faire revenir la tête magnétique à la position de référence depuis la deuxième position de bord après que la tête magnétique a atteint la deuxième position de bord.

3. Appareil de traitement de piste magnétique selon la revendication 1 ou 2, dans lequel
lorsque les données écrites doivent être vérifiées dans le traitement d'écriture de données sur une piste magnétique, l'unité d'entraînement est agencée pour exécuter un traitement de vérification en déplaçant la tête magnétique dans la direction opposée depuis la deuxième position de bord vers la position de bord de la piste magnétique après que la tête magnétique a atteint la deuxième position de bord.

4. Appareil de traitement de piste magnétique selon la revendication 1, 2 ou 3, dans lequel
dans le traitement de lecture de données sur une piste magnétique, l'unité d'entraînement est agencée pour exécuter de nouveau le traitement de lecture en déplaçant la tête magnétique dans la direction opposée depuis la deuxième position de bord vers la position de bord de la piste magnétique lorsqu'une erreur est trouvée après que la tête magnétique a atteint la deuxième position de bord.

5. Appareil de traitement de piste magnétique selon la revendication 1, 2 ou 3, dans lequel l'appareil de traitement de piste magnétique est une imprimante possédant une tête d'impression pour impression sur le support.

## Patentansprüche

1. Magnetstreifenverarbeitungsvorrichtung mit:
einem Einführungsschlitz (1), der eine Breite hat, die größer als die eines Mediums (2) in der ersten Richtung (D1) ist;
einer Beförderungseinheit (13) zur Beförderung des Mediums, die in einer erwünschten Position mit Bezug auf den Einführungsschlitz entlang einer zweiten Richtung (D2) orthogonal zu der ersten Richtung angebracht ist;
einem Magnetkopf (4), der fähig ist, sich zumindest durch den Abstand zu bewegen, der der Breite des Einführungsschlitzes entlang der ersten Richtung entspricht, wobei der Magnetkopf fähig ist, Daten auf einem Magnetstreifen, der an dem Medium entlang der ersten Richtung angebracht ist, zu lesen oder zu schreiben; und
einer Antriebseinheit (11) zum Antreiben des Magnetkopfs;
**gekennzeichnet durch**
eine Detektionseinheit (6) zur Detektion einer ersten Randposition und einer zweiten Randposition in der ersten Richtung, die beiden Rändern der Breite des Mediums entsprechen, und **dadurch**, daß
die Antriebseinheit eingerichtet ist, den Magnetkopf von einer vorbestimmten Referenzposition zu einer Randposition des Magnetstreifens in einem vorbestimmten Abstand von der ersten Randposition zu bewegen, wobei die Antriebseinheit eingerichtet ist, um den Magnetkopf von der Randposition des Magnetstreifens weiter zu der zweiten Randposition zu bewegen, während gleichzeitig Datenlese- oder Datenschreibverarbeitung auf dem Magnetstreifen unter Verwendung des Magnetkopfes durchführt wird, wobei die Antriebseinheit eingerichtet ist, um den Magnetkopf von der zweiten Randposition zu der Referenzposition nach der Ankunft des Magnetkopfes bei der zweiten Randposition zurückzubewegen.

2. Magnetstreifenverarbeitungsvorrichtung nach Anspruch 1, die außerdem aufweist:
eine Steuerungseinheit (10) zum Empfangen eines Befehls von einer Hostvorrichtung, um die Antriebseinheit auf Grundlage des Befehls zu steuern, wobei
die Antriebseinheit eingerichtet ist, um die Steuerungseinheit von der Endinformation zu informieren, bevor sie den Magnetkopf von der zweiten Randposition zu der Referenzposition zurückbewegt, nachdem der Magnetkopf die zweite Randposition erreicht.

3. Magnetstreifenverarbeitungsvorrichtung nach Anspruch 1 oder 2, wobei,
wenn geschriebene Daten bei einer Datenschreibverarbeitung auf einem Magnetstreifen überprüft werden sollen, die Antriebseinheit eingerichtet ist, um die Prüfverarbeitung durch Bewegen des Magnetkopfes in der entgegengesetzten Richtung von der zweiten Randposition zu der Randposition des Magnetstreifens durchzuführen, nachdem der Magnetkopf die zweite Randposition erreicht.

4. Magnetstreifenverarbeitungsvorrichtung nach Anspruch 1, 2 oder 3, wobei
bei der Datenleseverarbeitung auf einem Magnetstreifen die Antriebseinheit eingerichtet ist, um die Leseverarbeitung wieder durch Bewegen des Magnetkopfes in der entgegengesetzten Richtung von der zweiten Randposition zu der Randposition des Magnetstreifens durchzuführen, wenn ein Fehler gefunden wird, nachdem der Magnetkopf die zweite Randposition erreicht.

5. Magnetstreifenverarbeitungsvorrichtung nach Anspruch 1, 2 oder 3, wobei die Magnetstreifenverarbeitungsvorrichtung ein Drucker ist, der einen Druckkopf zum Drucken auf dem Medium hat.
